# EUROPEAN PATENT APPLICATION

(11) **EP 1 796 135 A1**
(43) Date of publication of application: **13.06.2007**
(21) Application number: 05774681.0
(22) Date of filing: 25.08.2005
(51) Int. Cl.: H01J 63/06, F21S 2/00, G02F 1/13357, F21Y 105/00

(54) **BACKLIGHT FOR LIQUID CRYSTAL DISPLAY**

(30) Priority: 26.08.2004 JP 2004247208
(71) Applicant: Dialight Japan Co., Ltd., Toyonaka-shi Osaka 561-0885 (JP)
(72) Inventor: HABA, Masanori Dialight Japan Co. Ltd., Ikeda-shi, Osaka 563-0043 (JP)
(74) Representative: Merkle, Gebhard
(86) International application number: PCT/JP2005/015475
(87) International publication number: WO 2006/022352

(57) **Abstract**

A backlight (23) comprises a panel case (24) arranged on a rear side of a liquid crystal display so as to face the rear side and has a light emitting area on a panel part which faces the rear side; an anode part with phosphor (25) provided inside the panel part corresponding to the light emitting area inside the panel part; and a linear cathode part arranged at a position facing the anode part in the panel case. The linear cathode part comprises a linearly extending conductive wire (33) and a field electron emitting part composed of a carbon nanowall (35) formed on an outer circumference surface of the conductive wire.

## Description

### FIELD OF THE INVENTION

The present invention relates to a backlight for liquid crystal display device that illuminates the liquid crystal display device from a rear-surface side thereof.

### BACKGROUND TECHNOLOGY

A liquid crystal display device is recently used as a display device adopted in various electronic devices in a broad range, such as a television, mobile telephone, personal computer, electronic notebook, and VTR with a built-in camera because it is thin, light and power-saving.

The liquid crystal display device, which is different from the Braun tube or a plasma display, does not emit light itself but controls an amount of incident light from outside to thereby display an image or the like. In the liquid crystal display device, a backlight that illuminates the liquid crystal display device is provided on a rear-surface thereof (see the Patent Literature 1).

In the electronic devices, it has gained recognition to reduce power consumption. It is said that the backlight for liquid crystal display device occupies approximately a half of the total power consumption in the electronic device, and it is, therefore, very important to reduce the power consumption of the backlight for liquid crystal display device. The demand for the less power consumption in the backlight for liquid crystal display device is increasingly higher as, for example, a size of a display screen in a liquid crystal television or the like is increased. In view of the technological background of the backlight for liquid crystal display device, the inventors of the present invention focused on researches for such a backlight for liquid crystal display device that can achieve an improved brightness when the liquid crystal display device is illuminated, while pursuing the reduction of the power consumption of the backlight for liquid crystal display device at the same time.

A cold-cathode tube is increasingly adopted in the backlight for liquid crystal display device. In a typical backlight for liquid crystal display device, the demanded brightness is 10,000 cd/m². It has already become impossible to obtain the demanded brightness irrespective of the screen size in a conventional backlight of edge-light type wherein a arc tube (cold-cathode tube) is provided on a side surface of the liquid crystal display device, and a reflection plate, a light guiding plate, a diffusion sheet, a prism sheet, and the like, are used to illuminate the liquid crystal display device. Therefore, the backlight for liquid crystal display device has had no other choice than such a vertical type that the arc tube was provided vertically immediately below the rear surface of the liquid crystal display device.

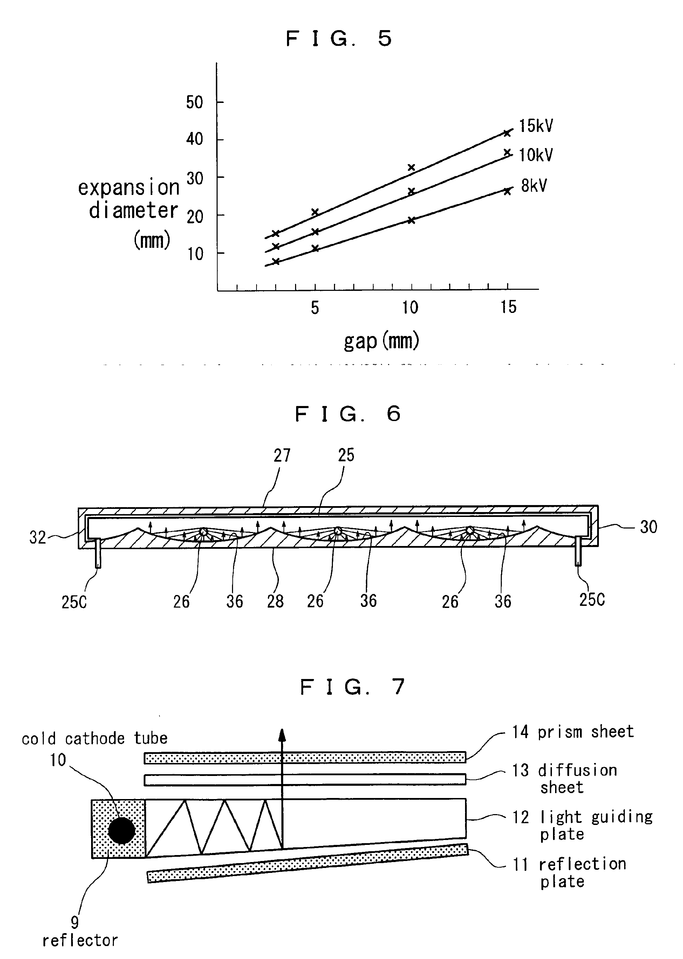

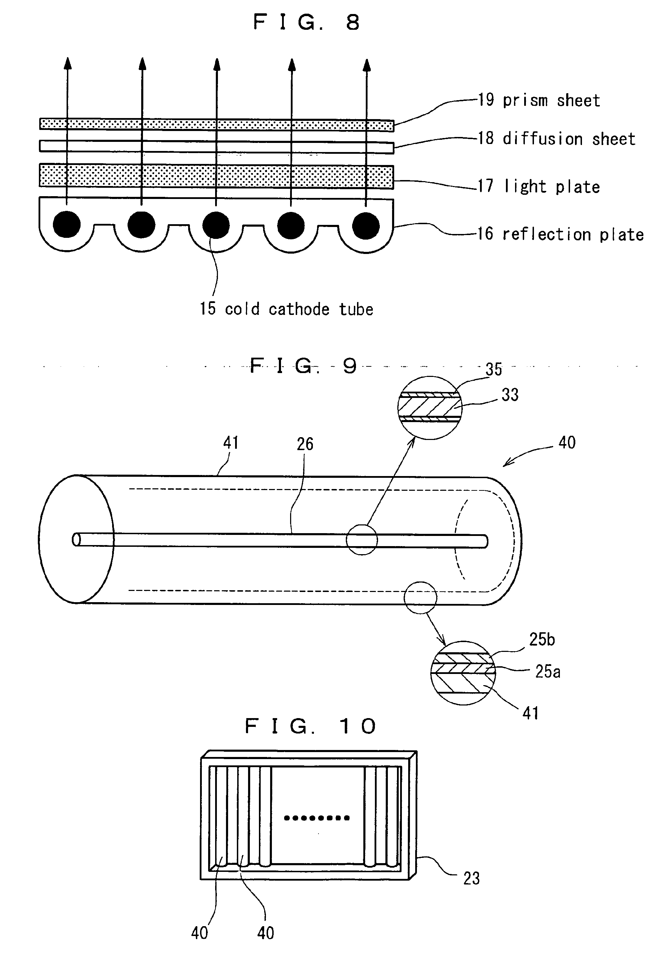

Figs. 7 and 8 respectively show the backlight of the edge-light type and the backlight of the vertical type. Referring to reference numerals shown in Fig. 7, 9 denotes a reflector, 10 denotes a cold-cathode tube (arc tube), 11 denotes a reflection plate, 12 denotes a light guiding plate, 13 denotes a diffusion sheet, and 14 denotes a prism sheet. Referring to reference numerals shown in Fig. 8, 15 denotes a cold-cathode tube, 16 denotes a reflection plate, 17 denotes a diffusion plate, 18 denotes a diffusion sheet, and 19 denotes a prism sheet.

In the backlight of the vertical type, a plurality of arc tubes having a straight shape is arranged so as to align as adjacent to one another, or the arc tubes are provided in a winding manner.

However, the backlight of the vertical type still consumes a large amount of emission power in order to obtain the demanded brightness because the brightness in the light emission by the arc tube itself is low.

Further, it is necessary to, for example, more densely arrange the arc tubes or increase the number of the arc tubes to be arranged in order to obtain such a brightness that can respond to a larger size of the liquid crystal television.

In either of the backlight of the edge-light type and the backlight of the vertical type, it is necessary to further provide the diffusion sheet and the diffusion plate so that the light emission can be diffused, which increases the number of the parts constituting the backlight. As a result, there has been such disadvantage that manufacturing costs are increased.
- PATENT LITERATURE:: H06-242439 of the Japanese Patent Applications Laid-Open

### DISCLOSURE OF THE INVENTION

### PROBLEMS TO BE SOLVED BY THE INVENTION

A main object to be solved by the present invention is to inexpensively provide a backlight provided in a liquid crystal display device of a flat-panel type capable of obtaining a high brightness in light emission with less power consumption and illuminating the liquid crystal display device uniformly with a fewer number of costly parts, such as a diffusion sheet, which were necessarily provided in an edge-light backlight and a vertical backlight.

### MEANS FOR SOLVING THE PROBLEMS

A backlight according to the present invention is a backlight having a flat-panel shape for illuminating a rear surface of a liquid crystal display device, comprising a panel case comprising a planar panel unit that is divided into a plurality of light-emitting areas, a plurality of anodes with phosphor formed on an inner surface of the planar panel unit in such a manner that respectively correspond to the light-emitting areas, and a plurality of linear cathodes provided so as to face the plurality of anodes with phosphor in the panel case, wherein the plurality of linear cathodes each comprises a conductive wire linearly extending in a direction substantially in parallel with the plurality of anodes with phosphor and a field electron emitter including a carbon-based film and formed on an outer peripheral surface of the conductive wire, and the field electron emitters of the plurality of linear cathodes are provided so as to emit electrons radially toward the plurality of light-emitting areas.

The present invention focuses on advantages of a field electron emitting arc tube as an arc tube. The field electron emitting arc tube, which is different from the cold-cathode tube, is vacuum with no rare gas or mercury vapor included therein or substantially vacuum. The further advantages of the field electron emitting arc tube are: eco-friendliness; higher arrangement density because it is thin and a tube wall thereof is not subject to heating; a high efficiency and a high brightness in light emission; and a long life and a high reliability; and the like.

Focusing on the superior characteristics of the field electron emitting arc tube, the inventors of the present invention developed the field electron emitting arc tube capable of emitting light with a high brightness with less power consumption than in the conventional technology, and applied the development result to the backlight of the flat-panel type.

The backlight for liquid crystal display device according to the present invention can illuminate the liquid crystal display device without arranging to align a large number of arc tubes or providing a diffusion sheet or the like in order to eliminate any nonuniformity in the brightness as in the conventional backlight.

The "linear" shape in the foregoing description is not necessarily limited to a straight-line shape, and may be such a curved shape as a spiral shape or a wave shape, a shape mixed with a straight-line shape and a curved shape, or any other shape, and may be a filled-core shape or a hollow shape. Further, a sectional shape thereof is not particularly limited, and may be a circular shape, an elliptical shape, a rectangular shape or any other shape.

The carbon-based form is preferably a carbon nanowall. A sectional surface of the conductive wire is substantially circular, and the carbon nanowall is formed as film so as to have a high orientation in a substantially even thickness on an entire outer peripheral surface of the conductive wire.

The carbon-based film is preferably a carbon nanowall having such a structure that wall-shape sections comprising a large number of nano-order carbon thin pieces are formed collectively and continuously, and the wall-shape sections are used as wall-shape sections for emitting the electrons.

### BRIEF DESCRIPTION OF THE DRAWINGS

Fig. 1 is a perspective view wherein a liquid crystal display device and a backlight separated from a main body of a liquid crystal television are shown.
Fig. 2 is a partially broken perspective view of the backlight shown in Fig. 1.
Fig. 3 is a side sectional view of the backlight shown in Fig. 2.
Fig. 4 is a plan sectional view taken along A - A line shown in Fig. 3.
Fig. 5 shows characteristics of the backlight.
Fig. 6 shows another modified example of the backlight.
Fig. 7 shows a schematic constitution of a conventional backlight of an edge-light type.
Fig. 8 shows a schematic constitution of a conventional backlight of a vertical type.
Fig. 9 is a perspective view of an illumination lamp according to another preferred embodiment of the present invention.
Fig. 10 is a perspective view of a backlight according to a preferred embodiment of the present invention in which the illumination lamp shown in Fig. 9 is used.
Fig. 11 is an illustration of a film formation device for forming a carbon nanowall on an outer peripheral surface of a conductive wire and a film formation method in which the film formation device is used.
Fig. 12A is an enlarged view of a sectional surface of the conductive wire.
Fig. 12B is a partially enlarged view of the conductive wire.

### DESCRIPTION OF REFERENCE NUMERALS

22 liquid crystal display device
23 backlight
24 panel case
25 anode with phosphor
33 conductive wire
35 carbon-based film (carbon nanowall)

### PREFERRED EMBODIMENTS OF THE PRESENT INVENTION

Hereinafter, preferred embodiments of a backlight for liquid crystal display device according to the present invention are described in detail referring to the accompanied drawings.

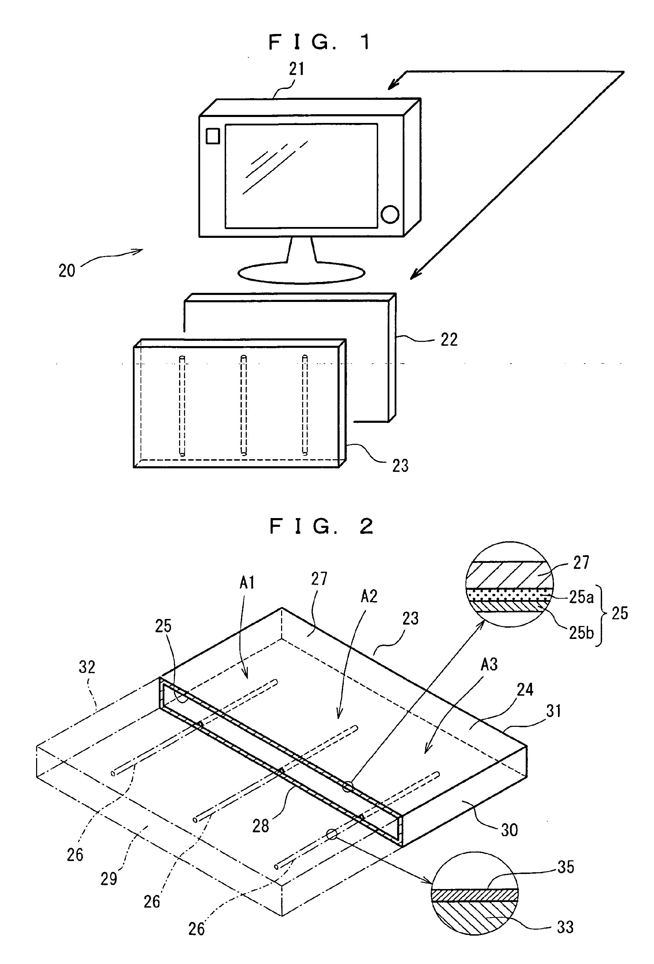

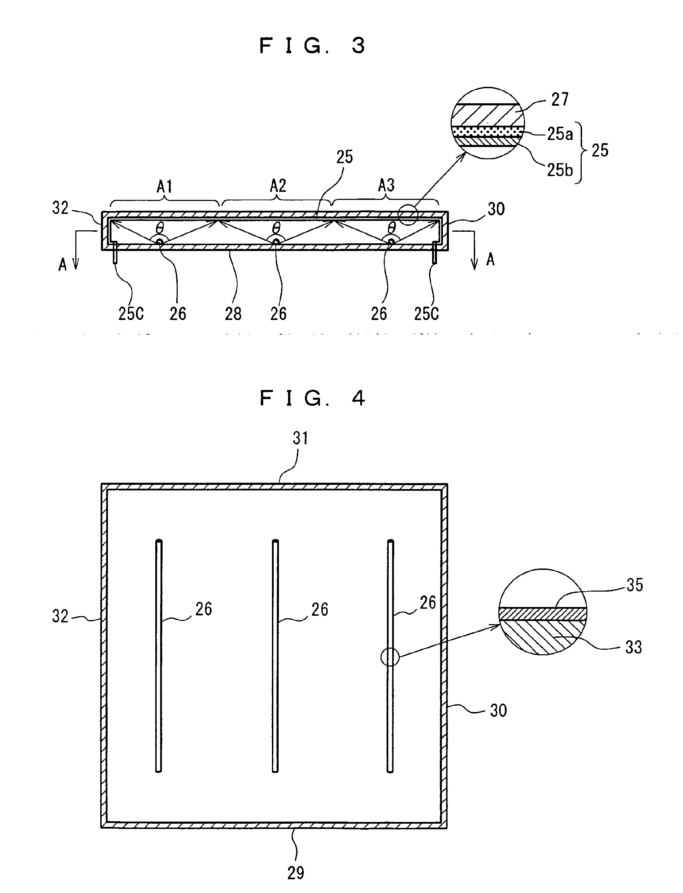

Referring to reference numerals shown in Figs. 1 through 5, 20 denotes an entire liquid crystal television, 21 denotes a main body of the liquid crystal television, 22 denotes a liquid crystal display device incorporated in the main body 21 of the liquid crystal television, and 23 denotes a backlight according to the present preferred embodiment for illuminating a rear surface of the liquid crystal display device 22.

The backlight 23 comprises a flat panel case 24, an anode with phosphor 25, and linear cathodes 26.

The panel case 24 is surrounded by a pair of opposing planar panels 27 and 28, and four side-surface panels 29, 30, 31 and 32, and the inside of the panel case 24 is vacuum or substantially vacuum. The technology for evacuating or sealing the panel case 24 to make it vacuum is conventionally known, and is not described in detail. One of the planar panels 27 faces the rear-surface side of the liquid crystal display device 22. The planar panel 27 is divided into a plurality of, three in the present preferred embodiment, light-emitting areas **A1**, **A2** and **A3** in order to illuminate the rear surface of the liquid crystal display device 22. The planar panel 27 consists of glass, preferably soda lime glass. The other planar panel 28 is located in the rear-surface side concerning the planar panel 27. The planar panel 28 and the side-surface panels 29, 30, 31 and 32 are integrally formed from glass in a manner similar to the planar panel 27. A material used for the panel case 24 is not limited to glass as far as the material can transmit the emitted light so that the rear surface of the liquid crystal display device 22 can be illuminated. It is preferable that the material for the panel case 24 has a superior light transmittance.

The anode with phosphor 25 is formed on an inner surface of the planar panel 27. The anode with phosphor 25 comprises at least two layers, which are a phosphor layer 25a and an anode layer 25b. The phosphor layer 25a is coated to the inner surface of the planar panel 27. The anode layer 25b is deposited on the phosphor layer 25a by means of the vacuum deposition or sputtering method. An anode terminal 25c is a terminal for pulling out the anode layer 25b of the anode with phosphor 25 externally. A fluorescent material for the phosphor layer 25a is not particularly limited. It is preferable that the fluorescent material for the phosphor layer 25a is a material capable of light emission in white color. A material used for the anode layer 25b is preferably an aluminum thin film. The material used for the anode layer 25b is not limited to aluminum, and may be ITO (indium - tin oxides) that is a transparent electrode. The ITO can be formed ,for example, by means of the sputtering method. The anode with phosphor 25 is formed in such a manner that extends on the inner surface of the planar panel 27 in a planar shape. The anode with phosphor 25 is divided so as to correspond to the plurality of light-emitting areas A1, A2 and A3 on the inner surface of the planar panel 27. The light-emitting areas A1, A2 and A3 have a rectangular shape in a plan view.

The anode with phosphor 25 can be divided into a plurality of anode with phosphor parts 25A1, 25A2 and 25A3 in response to the light-emitting areas A1, A2 and A3, and the plurality of anode with phosphor parts 25A1, 25A2 and 25A3 constitute the anode with phosphor 25.

The linear cathode parts 26A1, 26A2 and 26A3, which correspond individually to the anode with phosphor parts 25A1, 25A2 and 25A3, are provided on the inner surface of the planar panel 28. Each of the linear cathode parts 26A1, 26A2 and 26A3 comprises a conductive wire 33 that is preferably formed from nickel.

A carbon nanowall is formed on a surface of the conductive wire 33 as a carbon-based film 35. In the case, field concentration can be thereby assisted in the case where there are concavity and convexity on the surface of the conductive wire 33. The concavity and convexity are microscopic and not shown in the drawing.

Comparing the carbon-based film 35 which is the carbon nanowall to the carbon-based film 35 which is a carbon nanotube, catalytic metal is necessary and the deposition is necessarily performed in a high vacuum state in the case of the carbon nanotube, while the catalytic metal is unnecessary and the deposition can be performed in a relatively low vacuum state in the case of the carbon nanowall. Therefore, costs for the deposition can be reduced in the case of the carbon nanowall.

Further, the carbon nanotube has a defect that, for example, the electron emission is not easily stabilized since fluctuations are generated at an end thereof because it has a high aspect ratio and thin, and the carbon nanotube is easily oxidized and burnt by heat generated in the electron emission due to its large surface area under a small amount of oxygen, which results in the generation of flickers in the light emission. On the contrary, in the carbon nanowall, wall-shape sections formed from a large number of nano-order carbon thin pieces are collectively and continuously formed in the planar direction on the surface of the conductive wire 33, and the electrons are emitted since high field concentration is generated on upper surfaces of the wall-shape sections at edges thereof by voltage application. Therefore, the carbon nanowall is superior in terms of its mechanical strength, and can stably emit the electrons in the low-vacuum environment.

In particular, it was more difficult to grow the carbon nanotube evenly in a circumferential direction with the catalytic metal attached thereto in the high vacuum state on the surface of the conductive wire 33 having a circular section different from a flat substrate surface. Therefore, the carbon nanotube was conventionally coated or the like by means of the spray or dipping method to the surface of the conductive wire 33. Thus, it was difficult to form the carbon nanotube directly on the surface of the conductive wire 33.

On the other hand, the carbon nanowall does not require the catalytic metal and can be easily formed on the surface of the conductive wire 33 because it is done in the low-vacuum state. Specifically, because the wall-shape sections are in a state of a continuous film formation, the carbon-based nanowall can be stably formed even on the surface of the thin conductive wire 33.

According to the foregoing description, the carbon nanowall has a crystal structure which is similar to that of graphite having a high electric conductivity, and comprises dozens of graphene sheets, wherein the high field concentration is generated on the upper surfaces of the wall-shape sections that is the edges thereof by the voltage application so as to emit the electrons. The carbon nanowall, that is superior in its thermal stability and mechanical strength, has a stable electron emission property even in the low-vacuum environment. The wall-shape sections of the carbon nanowall comprise side wall surfaces and upper wall surfaces (edges), and the field concentration is generated on the upper wall surfaces. As a result, the electrons are emitted from the upper wall surfaces. The carbon nanowall gives only a very low load to environment in a point that, for example, the electrons can be emitted at a relatively low temperature in such a low-vacuum environment as approximately 10⁻¹ through 10⁻² Pa.

Film of the carbon nanowall can be formed by means of the direct-current plasma CVD (chemical vapor deposition) method. Describing the deposition method, the carbon nanowall is formed on the surface of the conducive wire in such a manner that the conductive wires having a circular section are provided substantially in parallel with each other in a longitudinal direction on an inner wall surface of a depressurized internal space of a cylindrical member at substantially a central part thereof, hydrogen gas and carbon-based gas are introduced into the internal space, and a direct-current power supply is applied between the cylindrical member as a cathode and the conductive wires as an anode so that a plasma column is generated in the cylindrical member. There are a conductor having a coil shape, the cylindrical member that is open at both ends, and the cylindrical member having a network or palisaded shape in a peripheral wall, as a cylindrical member. In the deposition, a voltage of the direct-current power supply is 300 through 1000 V, and preferably 500 through 800 V. A pressure in the internal space is 10 through 10000 Pa, and preferably 1000 through 2000 Pa.

In the deposition, film of the carbon nanowall is formed in the state where the conductive wire is circular in section and provided at the substantial center of the cylindrical member. Therefore, the carbon nanowall is formed on the outer peripheral surface of the conductive wire in a substantially even thickness so as to have an equally high orientation across the entire outer peripheral surface of the conductive wire. As a result, the formed film is made to have a superior electron emission property.

In addition, the concavity and convexity on the surface of the conductive wire 33 includes, for example, concavity and convexity with visible sizes formed by means of threading process or the like, concavity and convexity with microscopic sizes formed by milling the conductive wire 33, or concavity and convexity resulting from only a surface roughness. The concavity and convexity includes, for example, spiral concavity and convexity in the circumferential direction of the conductive wire 33. The concavity and convexity includes concavity and convexity along the longitudinal direction of the conductive wire 33. When the concavity and convexity are formed in the longitudinal direction of the conductive wire 33, for example, the outer peripheral surface of the conductive wire 33 is polished in the longitudinal direction by a polisher to roughen the surface so that a large number of microscopic thread-like concavity and convexity are formed. It is preferable that the concavity and convexity is aligned with respect to the circumferential direction or the longitudinal direction of the conductive wire 33 in order to stabilize the electron emission. The sizes, shapes and the number of the concavity and convexity, or the like are not particularly limited. The conductive wire 33 is not particularly limited as far as it has conductivity, and is not limited to nickel.

The carbon-based film 35 can be formed by means of such a technology as screen printing, coating, CVD (chemical deposition), or electrodeposition process.

When the direct-current voltage or a high-frequency pulse voltage is applied between the linear cathode parts 26A1, 26A2 and 26A3 and the anode with phosphor parts 25A1, 25A2 and 25A3 (anode with phosphor 25), the electrons are emitted from the carbon-based films 35, which are respectively the field electron emitters of the linear cathode parts 26A1, 26A2 and 26A3, to the corresponding anode with phosphor parts 25A1, 25A2 and 25A3 so as to extend radially at the radiation angle of θ. The linear cathode parts 26A, 26A2 and 26A3 are respectively provided so as to face the anode with phosphor parts 25A1, 25A2 and 25A3 with a predetermined gap between them. The gap may be such a dimension that the electrons emitted from the carbon-based films 35 of the linear cathode parts 26A1, 26A2 and 26A3 at the radiation angle of θ can cover the light-emitting areas A1, A2 and A3 of the anode with phosphor parts 25A1, 25A2 and 25A3. The respective conductive wires 33 of the linear cathode parts 26A1, 26A2 and 26A3 comprise the conductive wires independent from one another in the present preferred embodiment. According to another preferred embodiment, the conductive wires 33 of the linear cathode parts 26A1, 26A2 and 26A3 may be arranged to align to one another. The respective conductive wires 33 of the linear cathode parts 26A1, 26A2 and 26A3 may be constituted in such a manner that a conductive wire is meandrous or bent in the panel case 24.

When the direct-current voltage is applied between the linear cathode parts 26A1, 26A2 and 26A3 and the anode with phosphor parts 25A1, 25A2 and 25A3, the field is intensively concentrated on sharp sections of the carbon-based films 35 which are the field electron emitters of the linear cathode parts 26A1, 26A2 and 26A3, and the electrons break through an energy barrier based on the quantum tunnel effect and are emitted into the vacuum. The emitted electrons are drawn to the corresponding anode with phosphor parts 25A1, 25A2 and 25A3 and collide with the phosphors. As a result, the phosphors present in the respective light-emitting areas A1, A2 and A3 of the anode with phosphor parts 25A1, 25A2 and 25A3 are excited, and emit white lights which are visible lights.

Fig. 5 shows a relationship between the gap between the planar panels 27 and 28 (facing gap) shown in a horizontal axis and an expansion diameter (mm) of the electrons radiated from the carbon-based films 35 as the field electron emitters at the radiation angle of θ shown in a vertical axis. Fig. 5 shows the relationships when the direct-current voltage applied between the linear cathode parts 26A1, 26A2 and 26A3 and the anode with phosphor parts 25A1, 25A2 and 25A3 is 8 kV, 10 kV and 15 kV. It is shown by Fig. 5 that the expansion diameter of the electrons is increased as the direct-current voltage is increased even with the same gap.

An experiment conducted by the inventors of the present invention is described below.

It is assumed that the planar size of the panel case 24 was horizontally and vertically 90 mm, and a thickness of the case was 10 mm. A length of the linear cathode parts 26A1, 26A2 and 26A3 was 60 mm. 10 kV (frequency of 3 kHz) was applied by a pulse power supply between the linear cathode parts 26A1, 26A2 and 26A3 and the anode with phosphor parts 25A1, 25A2 and 25A3. As a result of the voltage application, the brightness in the light emission by the backlight according to the present preferred embodiment was 70,000 cd/m², and the uniformity obtained in the brightness was at least 90% (12 measuring points). Further, in the backlight according to the present preferred embodiment, there was not any deterioration in the brightness as a result of the light emission in a long period (720 hours), and a temperature of the surface of the panel case was not increased.

Because the linear cathode 26 has a circular or elliptical section, the electrons can be radially emitted in 360-degree direction from the entire outer peripheral surface thereof. Further, the light-emitting area covered by one linear cathode part increases as the backlight 23 is thinner and has a larger area, and the number of the linear cathode parts to be provided is reduced. Therefore, it is necessary to emit the electrons with a high efficiency and a high stability from the linear cathode part in order to obtain the backlight capable of emitting the light with the higher brightness. In the present preferred embodiment wherein, not the carbon nanotube, but the carbon nanowall, was used as the electron emitting material formed on the surfaces of the conductive wires constituting the linear cathode, the electrons were emitted with a high efficiency and a high stability from the linear cathode as proven in the experiment. As a result, the backlight with the high brightness in the light emission could be obtained.

Furthermore, as shown in Fig. 6, electron reflection surfaces 36A1, 36A2 and 36A3 which are curved in a concavity shape in regard to the linear cathode parts 26A1, 26A2 and 26A3 may be provided so as to correspond to linear cathode parts 26A1, 26A2 and 26A3 at positions on the opposite side of the anode with phosphor parts 25A1, 25A2 and 25A3, and the linear cathode parts 26A1, 26A2 and 26A3 may be arranged at focal points of the electron reflection surfaces 36A1, 36A2 and 36A3. When the electron reflection surfaces 36A1, 36A2 and 36A3 are provided, the electrons emitted from the respective linear cathode parts 26A1, 26A2 and 26A3 in the respective direction of the electron reflection surfaces 36A1, 36A2 and 36A3 are reflected respectively in parallel toward the anode with phosphor parts 25A1, 25A2 and 25A3 sides. As a result, the much higher brightness can be obtained in the light emission. Further, in the case where a half of the outer peripheral surfaces of the conductive wires 33 of the linear cathode parts 26A1, 26A2 and 26A3 facing the anode with phosphor parts 25A1, 25A2 and 25A3 is coated for insulation, and the carbon-based film is formed on the other half of the outer peripheral surfaces, the electrons from the half of the conductive wires 33 in the linear cathode parts 26A1, 26A2 and 26A3 can be reflected on the electron reflection surfaces 36A1, 36A2 and 36A3 and directed toward the respective anode with phosphor parts 25A1, 25A2 and 25A3 sides. As a result, the thickness of the panel case can be further reduced.

Besides, Fig. 9 shows an illumination lamp 40 having a tube shape. The illumination lamp 40 comprises an anode with phosphor 2 consisting of a phosphor layer 25a and an anode layer 5b on an inner surface of a vacuum sealing tube 41 having a approximately circular section, and a linear cathode 26 extending in a longitudinal direction in a substantially central part of the vacuum sealing tube 41. In a manner similar to the foregoing description, the linear cathode 26 comprises a conductive wire 33 extending linearly and a field electron emitter 35 consisting of the carbon nanowall formed on an outer peripheral surface of the conductive wire 33.

Fig. 10 shows the backlight 23 for liquid crystal display device according to the present preferred embodiment in which the plural illumination lamps 40 are arranged to align at a predetermined interval between them. The backlight shown in Fig. 10 is provided on the rear surface of the liquid crystal display device 22 to illuminate the rear surface of the liquid crystal display device 22.

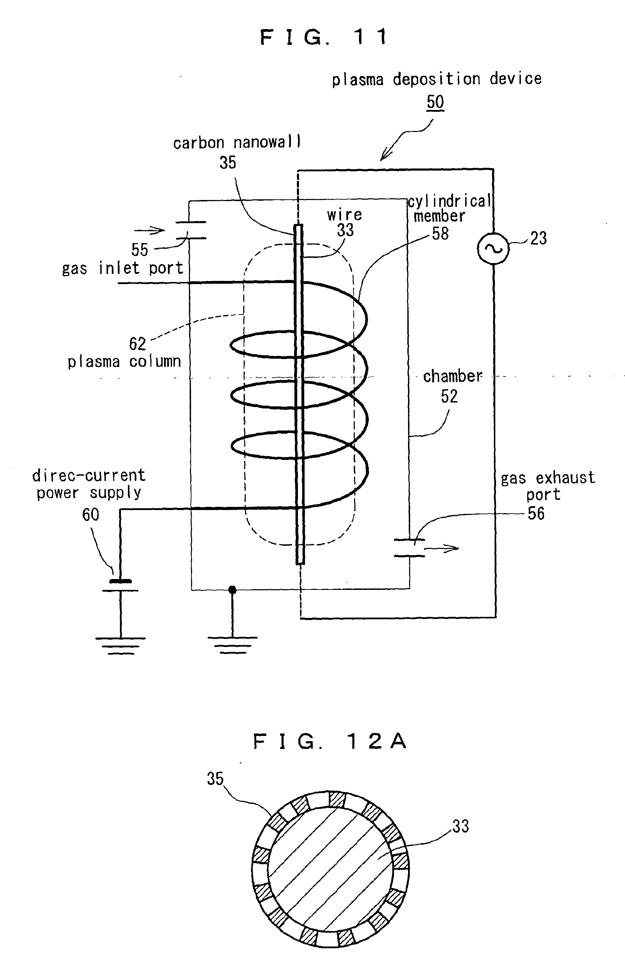

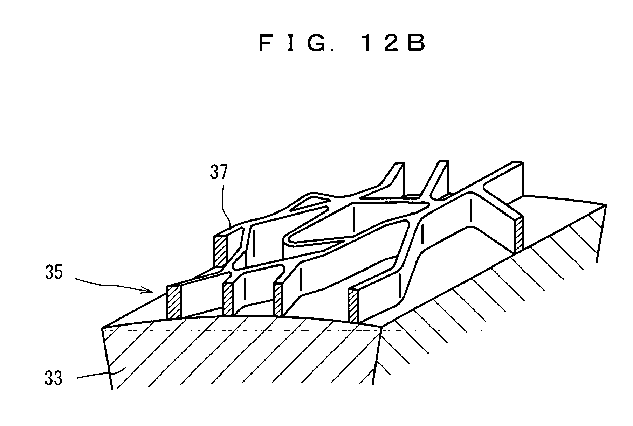

Referring to Figs. 11, 12A and 12B, a method of forming film of the carbon nanowall 35 on the outer peripheral surface of the conductive wire 33 is described. Film of the carbon nanowall 35 can be formed by means of the direct-current plasma CVD method. Referring to Fig. 11, a deposition device 50 comprises a conductive or insulating vacuum chamber 52. The vacuum chamber 52 is provided with a gas inlet port 54 and a gas vent 56. Gas for generating plasma is hydrogen gas, and a material gas is carbon-based gas. An internal pressure of the vacuum chamber 52 is in the range of 10 Pa - 10000 Pa. A conductive cylindrical member 58 having a coil shape, in which a peripheral wall is formed in a coil shape, is provided inside the vacuum chamber 52. The conductive wire 33, which is a substrate, is provided in an internal space of the cylindrical member 58. The cylindrical member 58 is extended in a long dimension. The wire 33 is provided in the internal space of the cylindrical member 58 and extended in a long shape. The inner peripheral surface of the cylindrical member 58 and the outer peripheral surface of the wire 33 face each other at a predetermined interval between them in the extended direction. The cylindrical member 58 is connected to a negative electrode of a direct-current power supply 60 of voltage-variable type so that a direct-current negative potential is applied thereto. The wire 33 is connected to a positive electrode of the direct-current power supply 60 so that a direct-current positive potential is applied thereto.

In the deposition device 50 thus constituted, when the internal pressure of the vacuum chamber 52 is reduced in the foregoing range, the hydrogen gas and the carbon-based gas are introduced from a gas supply cylinder not shown via the gas inlet port 54, and the negative potential of the direct-current power supply 60 is applied to the cylindrical member 58, a plasma column 62 is generated in the internal space of the cylindrical member 58, and film of the carbon nanowall 35 is formed on the surface of the wire 33. The voltage of the direct-current power supply 60 is 300 through 1000 V.

Through implementing a aforementioned procedure, film of the carbon nanowall 35 is formed on the entire outer peripheral surface of the conductive wire 33. As shown in Figs. 12A and 12B, the carbon nanowall 35 has a shape wherein wall-shape sections 37 consisting of a large number of nano-order carbon thin pieces are formed collectively and continuously. Because the conductive wire 33 is provided at the center of the cylindrical member 58, the wall-shape sections 37 are oriented across the entire outer peripheral surface of the conductive wire 33 in a standing manner radially from the center of the conductive wire 33 and in a substantially even thickness from the outer peripheral surface of the conductive wire 33. The carbon nanowall 35 has such a shape that the field is concentrated on upper ends of the wall-shape sections 37.

In the foregoing description, the wall-shape sections 37 of the carbon nanowall 35 are used as the wall-shape sections for emitting the electrons. Though not shown, the wall-shape sections 37 can be used, not as the electron-emitting source, but as the wall-shape sections for dispersing to arrange carbon films having a needle shape (carbon needles) in regions surround by the wall-shape sections. The field concentration is easily generated at edges of the needle-shape carbon needles having a high aspect ratio such as the carbon nanotube, however, the field concentration is not caused when a large number of carbon needles are arranged. Therefore, it is preferable that the carbon needles are dispersed and arranged. In the present invention, the wall-shape sections of the carbon nanowall can be used, not as the electron-emitting source, but as the wall-shape sections for dispersing to arrange the carbon needles.

### INDUSTRIAL APPLICABILITY

The present invention can be applied to a backlight for liquid crystal display device provided on a rear-surface side of the liquid crystal display device so as to illuminate the rear surface.

## Claims

1. A backlight having a flat-panel shape for illuminating a rear surface of a liquid crystal display device, comprising:
a panel case comprising a planar panel unit which is divided into a plurality of light-emitting areas;
a plurality of anodes with phosphor formed on an inner surface of the planar panel unit in such a manner that correspond to the respective light-emitting areas; and
a plurality of linear cathodes provided so as to face each of the plurality of anodes with phosphor in the panel case, wherein
the plurality of linear cathodes each comprises a conductive wire extending linearly in a direction substantially in parallel with the plurality of anodes with phosphor and a field electron emitter including a carbon-based film formed on an outer peripheral surface of the conductive wire, and
the field electron emitters of each of the plurality of linear cathodes are provided so as to emit electrons radially toward each of the plurality of light-emitting areas.

2. The backlight for liquid crystal display device as claimed in Claim 1, wherein
the carbon-based form is a carbon nanowall, a sectional surface of the conductive wire is substantially circular, and the carbon nanowall is formed so as to have a high orientation in a substantially even thickness on an entire outer peripheral surface of the conductive wire.

3. The illumination device as claimed in Claim 1 or 2, wherein
the carbon-based film is a carbon nanowall having such a shape that wall-shape sections comprising a large number of nano-order carbon thin pieces are formed collectively and continuously, and
the wall-shape sections are used as wall-shape sections for emitting the electrons.

4. The illumination device as claimed in Claim 1 or 2, wherein
the carbon-based film is a carbon nanowall having such a shape that wall-shape sections comprising a large number of nano-order carbon thin pieces are formed collectively and continuously, and
the wall-shape sections are used as wall-shape sections for dispersing to arrange carbon films having a needle shape.

5. The backlight for liquid crystal display device as claimed in any of Claims 1 through 4, wherein
the conductive wires are provided with concavity and convexity for assisting field concentration on surfaces thereof.

6. The backlight for liquid crystal display device as claimed in any of Claims 1 through 5, wherein
the plurality of anodes with phosphor are integrally formed.

7. The backlight for liquid crystal display device as claimed in any of Claims 1 through 6, wherein
electron reflection surfaces which are curved in a concavity shape are provided so as to correspond to each of the linear cathodes at positions on the opposite side of the plurality of respective anodes with phosphor, and
the plurality of linear cathodes are arranged at focal points of the respective electron reflection surfaces.

8. The backlight for liquid crystal display device as claimed in Claim 7, wherein
a half of outer peripheral surfaces of the conductive wires of the linear cathodes facing the anodes with phosphor is coated for insulation, and another half of the outer peripheral surfaces are directed toward the electron reflection surfaces.

9. The backlight for liquid crystal display device as claimed in any of Claims 1 through 8, wherein
the plurality of linear cathodes are formed integrally one another in such a manner that a conductive wire is bent in a snaking manner in the panel case.

10. The backlight for liquid crystal display device as claimed in any of Claims 1 through 8, wherein
the plurality of linear cathodes are arranged so that the plurality of conductive wires independent from each other faces the plurality of respective anodes with phosphor.
